# EUROPEAN PATENT SPECIFICATION

(11) **EP 1 395 482 B1**
(45) Date of publication and mention of the grant of the patent: **13.10.2004**
(21) Application number: 02743961.1
(22) Date of filing: 17.06.2002
(51) Int. Cl.: B62D 7/18

(54) **TRUCK CORNER MODULE WITH SPLIT KINGPIN SUPPORT**
LENKBARE RADAUFHÄNGUNG MIT GETEILTER ACHSSCHENKELBOLZENHALTERUNG
MODULE D'ANGLE DE CAMION COMPORTANT UN SUPPORT DE PIVOT DIVIS

(30) Priority: 15.06.2001 NL 1018299
(43) Date of publication of application: 10.03.2004
(73) Proprietor: AB SKF, S-415 50 Göteborg (SE)
(72) Inventor: HUHN, Norbert, D-97424 Schweinfurt (DE); GOTHBERG, Sven, S-421 59 V Frolunda (SE); TANKE, Jesko-Henning, D-97422 Schweinfurt (DE); DITTMAR, Rico, D-98574 Schmalhalden (DE); KAPAAN, Hendrikus, Jan, NL-3435 DM Nieuwegein (NL)
(74) Representative: van Westenbrugge, Andries
(86) International application number: PCT/NL2002/000396
(87) International publication number: WO 2002/102643

(56) References cited:
- WO-A-01/81153
- DE-A- 19 538 212
- US-A- 1 932 340
- US-A- 5 413 365

## Description

The invention is related to a truck corner module, comprising wheel carrying means with an axle stub and a kingpin arrangement for supporting the axle stub with respect to a truck axle, said kingpin arrangement being provided with a base member which carries a lower kingpin support and an upper kingpin support which are spaced apart, at least one of the kingpin supports being a separate component being intended for assembly with the base member and the kingpin after bringing said kingpin and base member into their nominal position with respect to each other.

A truck corner according to the preamble of claim 1 is disclosed in US-A-1932340. Said prior art truck comer has at least one of the kingpin supports as a separate component being intended for assembly with the base member and the kingpin after bringing said kingpin and base member into their nominal position with respect to each other.

According to the invention, the truck comer module is characterised by an auxiliary unit connected to the base member, said auxiliary unit comprising a steer lever and/or fixing means for fixing a brake calliper thereto, as well as a recess within which the base member together with the lower kingpin support is tightly fitted.

The fitting of the upper kingpin support can take place through e.g. screwing onto the lower kingpin support. Thus, the required play is obtained so as to provide the friction values required for optimal steering.

This procedure allows more freedom in assembling the truck corner module. Furthermore, it allows a better access to the components which makes up the truck comer module, which is of importance for e.g. the mounting of the bearings in the kingpin supports.

As mentioned, preferably the lower kingpin support is integrally formed with the base member, and the upper kingpin support is a separate component. Said kingpin supports and the kingpin engage each other through for example axial rolling element bearings. Additionally, the kingpin supports and the kingpin engage each other through plain thrust bearings. Said plain bearings can be hardened or coated so as to provide optimal wear resistance.

With the aim of simplifyiag the assembling process, the base member and the upper kingpin support are provided with abutments which define their mutual assembled positions. Preferably, the base member and the upper kingpin support are bolted together.

Furthermore, the kingpin can be provided with a tapered midsection the narrow end of which faces the upper kingpin support, said tapered midsection being intended for engagement with a sleeve having a correspondingly tapered base of the vehicle axle. In connection with securing the assembly, the kingpin can be provided with a screw threaded part bordering the narrow end of the midsection, said screw threaded part being intended for engagement with a lock nut which is to bear on the upper end of the sleeve.

A compact, stiff lay-out can be obtained in case the kingpin supports are provided on one face of the base member, and the axle stub is provided on the opposite face of the base member. The axle stub can be integrally formed with the base member. Alternatively, the axle stub can be a separate component, said component and the base member comprising fixation means for fixing the axle stub to the base member. In this respect, the axle stub may comprise a conically or cylindrically shaped end which fits in a correspondingly shaped bore of the base member.

The invention is also related to a method for assembling a truck comer module and a truck axle, comprising the steps of
- providing a truck comer module having at least one loose kingpin support,
- connecting the truck axle to the kingpin,
- assembling said truck comer module by connecting said at least one loose kingpin support
- assembling the auxiliary unit.

The wheel carrying means and the kingpin arrangement may consist of cast iron. The module may comprise sensors for measuring rotational speed, load, angular displacement, temperature etc.

The invention will now be described further with reference to an embodiment of the truck comer module as shown in the figures.
Fig. 1 shows a part of the truck comer module comprising a single kingpin support and a base member.
Fig. 2 shows the part according to figure 1 assembled with an auxiliary unit.
Fig. 3 shows the assembly of fig. 2, together with a hub unit.
Fig. 4 shows the assembly according to fig. 3, together with a kingpin and a vehicle axle.
Fig. 5 shows the complete assembled truck comer module, together with vehicle axle.
Fig. 6 shows a cross section to the assembly according to fig. 5.
Fig. 7 shows a further view to the assembly according to fig. 5.
Fig. 8 shows an alternative kingpin layout.

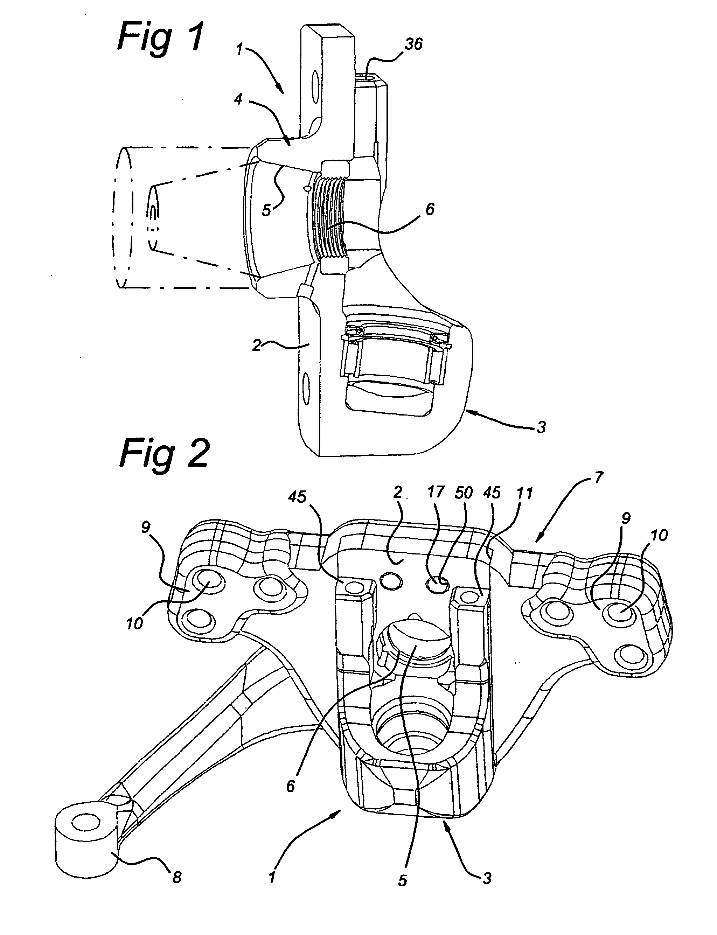

The part 1 shown in fig. 1 comprises a base member 2, and a lower kingpin support with forms a unity therewith. Furthermore the part 1 comprises a mounting ring 4 which is intended for connecting a wheel hub bearing unit thereto, This mounting ring 4 comprises a conically shaped inner surface 5 as well as a screw threaded portion 6. This part 1 is assembled with the auxiliary unit shown in fig. 2, which auxiliary unit i.a. has a steer lever 8 and fixing ears 9 with fixation holes 10 for mounting a disc brake calliper. The part 1 tightly fits within a recess 11 in the auxiliary unit 7.

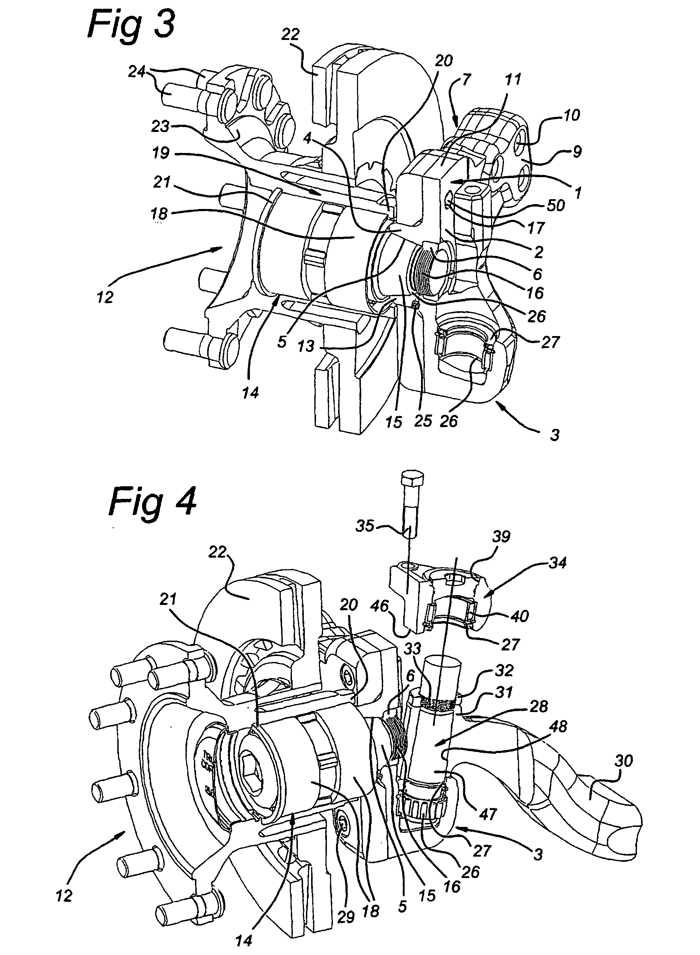

As shown in fig. 3, a wheel hub bearing unit 12 is mounted onto this assembly according to fig. 1. In particular, the inner bearing element 13 of the rolling element bearing 14 of the wheel hub bearing unit is connected through its conical surface 15 and its screw threaded portion 16 in the corresponding conically shaped bore 5 and screw threaded portion 6 of the part 1. By means of bolts 29 inserted in holes 17 running through the part I and threaded in the holes 50 of the auxiliary unit 7, the latter components are fixedly connected to each other.

The bearing 14 of the wheel hub bearing unit 12 comprises two outer rings 18, onto which the hub member 19 is mounted through flange 20 and O-ring 21. Said hub member 19 comprises a brake disc 22 as well as amounting flange 23 with wheel mounting bolts 24.

By means of a lock screw 25, which engages a circumferential groove 26 between the canically shaped part 15 and the screw threaded part 16, the wheel bearing unit 12 is locked with respect to the part 1.

Furthermore, the lower kingpin support comprises a roller bearing 26, as well as a seal 27 for sealing the kingpin 28, as shown in fig. 3 and 4, After the kingpin 28 has been assembled with the bearing 26 in the lower kingpin support 3, the fitting 31 of the vehicle axle 13 is lowered onto said kingpin 28. As both the kingpin 28 and the fitting 31 have conically shaped surfaces, a strong reliable force transfer is ensured. Subsequently, a locking nut 32 is threaded upon the screw threaded part 33 of the kingpin 28 so as to lock the kingpin 28 with respect to the fitting 31.

In the next step, the upper kingpin support 34 is placed onto the kingpin 28, and locked with respect to the base member 2 by means of bolts 35 which are threaded into the screw threaded holes 36 (see fig. 1).

Plain bearings 37, 38 are placed on the lower end and the top end of the kingpin 28. The upper plain bearing 38 can be adjusted by means of its screw threaded connection 39 to the upper kingpin support 34. Furthermore, a rolling bearing 40 and seal 27 is provided in the upper kingpin support 32 which engages the upper end of the kingpin 28.

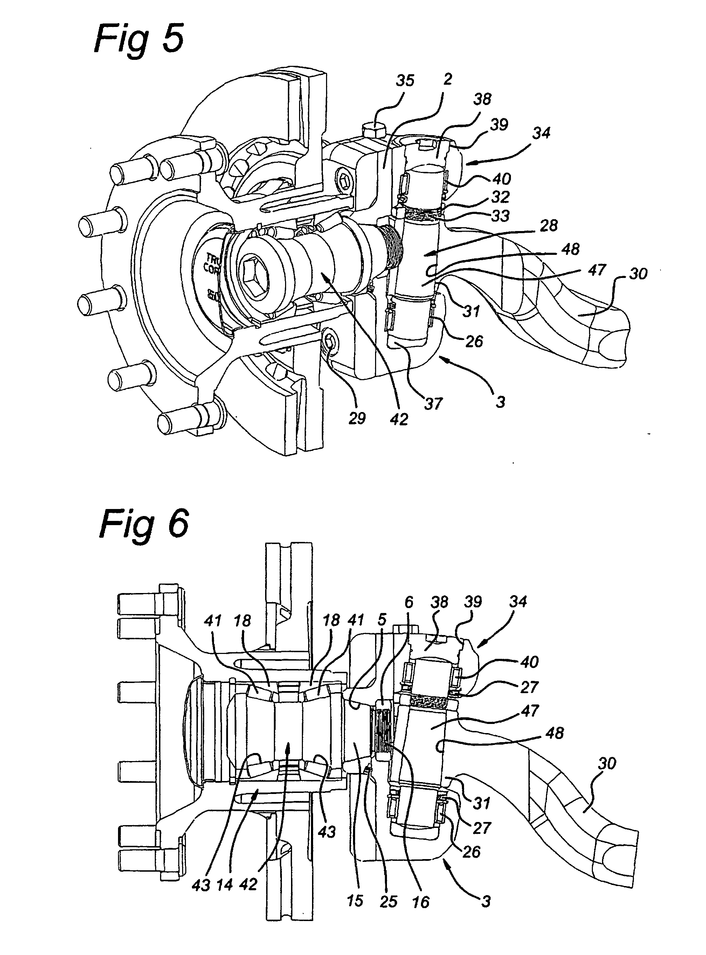

Fig. 6 shows a cross sectional view, with some details concerning the bearing 14 which comprises two separate outer rings 18, conical rollers 41 and an axle stub 42 having correspondingly shaped raceways 43 therein. The axle stub also carries the conical and threaded connection parts 15, 16.

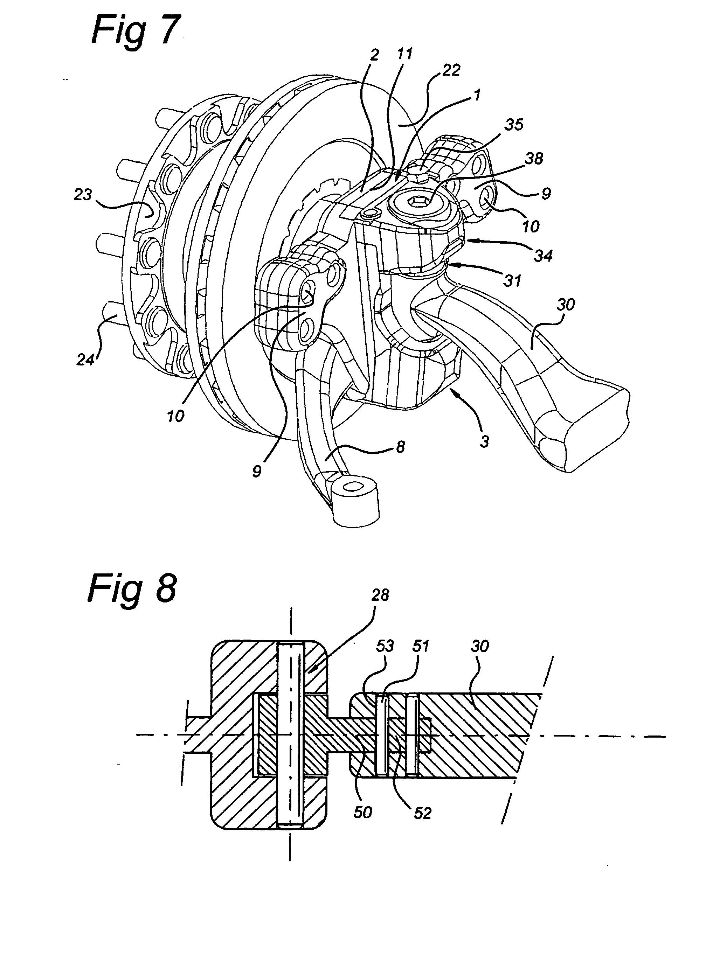

In fig. 7 the complete assembly of the truck comer module together with a vehicle axle 30 is depicted.

The embodiment of fig. 8 comprises a kingpin 28 which has an integral connecting arm 50, which is connected to the vehicle axle 30 through bolts 51 extending through the holes 52, 53 of said components.

## Claims

1. Truck corner module, comprising wheel carrying means with an axle stub (42) and a kingpin arrangement (1, 28, 34) for supporting the axle stub (42) with respect to a truck axle (30), said kingpin arrangement (1, 28, 34) being provided with a base member (2) which carries a lower kingpin support (3) and an upper kingpin support (34) which are spaced apart, at least one of the kingpin supports (3, 34) being a separate component being intended for assembly with the base member (2) and the kingpin (28) after bringing said kingpin (28) and base member (2) into their nominal position with respect to each other, **characterized by** an auxiliary unit (7) connected to the base member (2), said auxiliary unit (7) comprising a steer lever (8) and/or fixing means (9) for fixing a brake calliper thereto, as well as a recess (11) within which the base member (2) together with the lower kingpin support (3) is tightly fitted.

2. Truck corner module, according to claim 1, wherein the lower kingpin support (3) is integrally formed with the base member (2), and the upper kingpin support (34) is a separate component.

3. Truck corner module according to claim 2, wherein the kingpin supports (3, 34) and the kingpin (28) engage each other through (self aligning) rolling element bearings (26, 40)

4. Truck corner module according to claim 2 or 3, wherein the kingpin supports (3, 34) and the kingpin (28) engage each other through plain thrust bearings (37, 38).

5. Truck corner module according to claim 2, 3 or 4, wherein the base member (2) and the upper kingpin support (34) are provided with abutments (45, 46) which define their mutual assembled positions.

6. Truck corner module according to claim 2, 3, 4 or 5, wherein the base member (2) and the upper kingpin support (34) are bolted (35) together.

7. Truck corner module according to one of the preceding claims, wherein the kingpin (28) is provided with a tapered midsection (47) the narrow end of which faces the upper kingpin support (34), said tapered midsection (47) being intended for engagement with a fitting (31) having a correspondingly tapered bore (48) of the vehicle axle (30).

8. Truck corner module according to claim 7, wherein the kingpin (28) is provided with a screw threaded part (33) bordering the narrow end of the midsection (47), said screw threaded part (33) being intended for engagement with a lock nut (32) which is to bear on the upper end of the sleeve (31).

9. Truck corner module according to one of the preceding claims, wherein the kingpin supports (3, 34) are provided on one face of the base member (2), and the axle stub (42) is provided on the opposite face of the base member (2).

10. Truck corner module according to claim 9, wherein the axle stub is integrally formed with the base member.

11. Truck corner module according to claim 9, wherein the axle stub (42) is a separate component, said component (42) and the base member (2) comprising fixation/locking means (15, 16; 5, 6) for fixing the axle stub (42) to the base member (2).

12. Truck corner module according to claim 11, wherein the axle stub (42) comprises a conically (15) or cylindrically shaped end which fits in a correspondingly shaped base (5) of the base member (2).

13. Truck corner module according to any of the preceding claims, wherein the base member (2) is connected to an auxiliary unit (7) through bolts (29).

14. Truck corner module according to any of the preceding claims, wherein the kingpin (28) comprises an integral connection arm (50) for connection to the vehicle axle (30).

15. Method for assembling a truck corner module according to one of the preceding claims, and a truck axle, comprising the steps of
- providing a truck corner module having at least one loose kingpin support (34)
- connecting the truck axle (30) to the kingpin (28)
- assembling said truck corner module by connecting said at least one loose kingpin support (34)
- assembling the auxiliary unit (7).

## Patentansprüche

1. Lenkbare Radaufhängung, die eine Radhalteeinrichtung mit einem Achsschenkel (42) und einer Achsschenkelbolzenanordnung (1, 28, 34) umfasst, die den Achsschenkel (42) in Bezug auf eine Radachse (30) trägt, wobei die Achsschenkelbolzenanordnung (1, 28, 34) mit einem Basiselement (2) versehen ist, das einen unteren Achsschenkelbolzenträger (3) und einen oberen Achsschenkelbolzenträger (34) hält, die voneinander beabstandet sind, wobei wenigstens einer der Achsschenkelbolzenträger (3, 34) ein separates Bauteil ist, das zur Montage mit dem Basiselement (2) und dem Achsschenkelbolzen (28) bestimmt ist, nachdem der Achsschenkelbolzen (28) und das Basiselement (2) in ihre Sollposition in Bezug zueinander gebracht worden sind, **gekennzeichnet durch** eine Zusatzeinheit (7), die mit dem Basiselement (2) verbunden ist, wobei die Zusatzeinheit (7) einen Lenkhebel (8) und/oder eine Befestigungseinrichtung (9) zum Befestigen eines Bremssattels darin sowie eine Vertiefung (11) umfasst, in die das Basiselement (2) zusammen mit den unteren Achsschenkelbolzenträger (3) enganliegend gepasst wird.

2. Lenkbare Radaufhängung nach Anspruch 1, wobei der untere Achsschenkelbolzenträger (3) integral mit dem Basiselement (2) ausgebildet ist und der obere Achsschenkelbolzenträger (34) ein separates Bauteil ist.

3. Lenkbare Radaufhängung nach Anspruch 2, wobei die Achsschenkelbolzenträger (3, 34) und der Achsschenkelbolzen (28) miteinander über (selbst ausrichtende) Rollelementlager (26, 40) in Eingriff sind.

4. Lenkbare Radaufhängung nach Anspruch 3, wobei die Achsschenkelbolzenträger (3, 34) und der Achsschenkelbolzen (28) miteinander über Axialgleitlager (37, 38) in Eingriff sind.

5. Lenkbare Radaufhängung nach Anspruch 2, 3 oder 4, wobei das Basiselement (2) und der obere Achsschenkelbolzenträger (34) mit Anschlägen (45, 46) versehen sind, die ihre Montagepositionen zueinander definieren.

6. Lenkbare Radaufhängung nach Anspruch 2, 3, 4 oder 5, wobei das Basiselement (2) und der obere Achsschenkelbolzenträger (34) miteinander verschraubt (35) sind.

7. Lenkbare Radaufhängung nach einem der vorangehenden Ansprüche, wobei der Achsschenkelbolzen (28) mit einem verjüngten Mittelabschnitt (47) versehen ist, dessen schmales Ende dem oberen Achsschenkelbolzenträger (34) zugewandt ist, und der verjüngte Mittelabschnitt (47) zum Eingriff mit einem Passteil (31) der Fahrzeugachse (30) bestimmt ist, das eine entsprechende verjüngte Bohrung (48) hat.

8. Lenkbare Radaufhängung nach Anspruch 7, wobei der Achsschenkelbolzen (28) mit einem Schraubenkopfteil (33) versehen ist, das an das schmale Ende des Mittelabschnitts (47) angrenzt, und das Schraubenkopfteil (33) zum Eingriff mit einer Spannmutter (32) bestimmt ist, die auf das obere Ende der Buchse (31) drücken soll.

9. Lenkbare Radaufhängung nach einem der vorangehenden Ansprüche, wobei die Achsschenkelbolzenträger (3,34) an einer Fläche des Basiselementes (2) vorhanden sind, und der Achsschenkel (42) an der gegenüberliegenden Fläche des Basiselementes (2) vorhanden ist.

10. Lenkbare Radaufhängung nach Anspruch 9, wobei der Achsschenkel integral mit dem Basiselement ausgebildet ist.

11. Lenkbare Radaufhängung nach Anspruch 9, wobei der Achsschenkel (42) ein separates Bauteil ist, und das Bauteil (42) sowie das Basiselement (2) Fixier-/Arretiereinrichtungen (15, 16; 5, 6) zum Fixieren des Achsschenkels (42) an dem Basiselement (2) umfassen.

12. Lenkbare Radaufhängung nach Anspruch 11, wobei der Achsschenkel (42) ein konisch (15) oder zylindrisch geformtes Ende umfasst, das in eine entsprechend geformte Basis (5) des Basiselementes (2) passt.

13. Lenkbare Radaufhängung nach einem der vorangehenden Ansprüche, wobei das Basiselement (2) mit einer Zusatzeinheit (7) über Schrauben (29) verbunden ist.

14. Lenkbare Radaufhängung nach einem der vorangehenden Ansprüche, wobei der Achsschenkelbolzen (28) einen integralen Verbindungsarm (50) zur Verbindung mit der Fahrzeugachse (30) umfasst.

15. Verfahren zum Montieren einer lenkbaren Radaufhängung nach einem der vorangehenden Ansprüche und einer Radachse, das die folgenden Schritte umfasst:
Bereitstellen einer lenkbaren Radaufhängung mit wenigstens einem losen Achsschenkelbolzenträger (34),
Verbinden der Radachse (30) mit dem Achsschenkelbolzen (28),
Montieren der lenkbaren Radaufhängung durch Verbinden des wenigstens einen losen Achsschenkelbolzenträgers (34),
Montieren der Zusatzeinheit (7).

## Revendications

1. Module d'angle de camion, comportant des moyens de support de roues ayant une fusée d'essieu (42) et un agencement de pivot (1, 28, 34) pour supporter la fusée d'essieu par rapport à un essieu de camion (30), ledit agencement de pivot (1, 28, 34) étant muni d'un élément de base (2) qui porte un support de pivot inférieur (3) et un support de pivot supérieur (34) qui sont espacés, au moins un des supports de pivot (3, 34) étant un composant séparé prévu pour un assemblage avec l'élément de base (2) et le pivot (28) après avoir amené ledit pivot (28) et ledit élément de base (2) dans leur position nominale l'un par rapport à l'autre, **caractérisé par** une unité auxiliaire (7) connectée à l'élément de base (2), ladite unité auxiliaire (7) comportant un levier de direction (8) et/ou des moyens de fixation (9) pour fixer un étrier de frein, de même qu'un évidement (11) dans lequel l'élément de base (2) est agencé de manière serrée ensemble avec le support de pivot inférieur (3).

2. Module d'angle de camion selon la revendication 1, dans lequel le support de pivot inférieur (3) est formé en une seule pièce avec l'élément de base (2), et le support de pivot supérieur (34) est un composant séparé.

3. Module d'angle de camion selon la revendication 2, dans lequel les supports de pivot (3, 34) et le pivot (28) viennent en prise les uns avec les autres par l'intermédiaire de paliers d'éléments de roulement (à auto alignement) (26, 40).

4. Module d'angle de camion selon la revendication 2 ou 3, dans lequel les supports de pivot (3, 34) et le pivot (28) viennent en prise les uns avec les autres par l'intermédiaire de paliers de poussée lisses (37, 38).

5. Module d'angle de camion selon la revendication 2, 3 ou 4, dans lequel l'élément de base (2) et le support de pivot supérieur (34) sont munis de butées (45, 46) qui définissent leurs positions mutuelles assemblées.

6. Module d'angle de camion selon la revendication 2, 3, 4 ou 5, dans lequel l'élément de base (2) et le support de pivot supérieur (34) sont boulonnés (35) ensemble.

7. Module d'angle de camion selon l'une quelconque des revendications précédentes, dans lequel le pivot (28) est muni d'un tronçon médian conique (47) dont l'extrémité étroite est en vis-à-vis du support de pivot supérieur (34), ledit tronçon médian conique (47) étant prévu pour venir en prise avec un raccord (31) ayant un alésage conique correspondant (48) de l'essieu de véhicule (30).

8. Module d'angle de camion selon la revendication 7, dans lequel le pivot (28) est muni d'une partie filetée (33) suivant le bord de l'extrémité étroite du tronçon médian (47), ladite partie filetée (33) étant prévue pour venir en prise avec un écrou de verrouillage (32) qui vient en appui sur l'extrémité supérieure du manchon (3 1 ).

9. Module d'angle de camion selon l'une quelconque des revendications précédentes, dans lequel les supports de pivot (3, 34) sont agencés sur une première face de l'élément de base (2), et la fusée d'essieu (42) est agencée sur la face opposée de l'élément de base (2).

10. Module d'angle de camion selon la revendication 9, dans lequel la fusée d'essieu est formée en un seul bloc avec l'élément de base.

11. Module d'angle de camion selon la revendication 9, dans lequel la fusée d'essieu (42) est un composant séparé, ledit composant (42) et l'élément de base (2) comportant des moyens de fixation/verrouillage (15, 16 ; 5, 6) pour fixer la fusée d'essieu (42) sur l'élément de base (2).

12. Module d'angle de camion selon la revendication 11, dans lequel la fusée d'essieu (42) comporte une extrémité (15) mise en forme de manière conique ou de manière cylindrique qui s'agence dans une base mise en forme de manière correspondante (5) de l'élément de base (2).

13. Module d'angle de camion selon l'une quelconque des revendications précédentes, dans lequel l'élément de base (2) est connecté à une unité auxiliaire (7) par l'intermédiaire de boulons (29).

14. Module d'angle de camion selon l'une quelconque des revendications précédentes, dans lequel le pivot (28) comporte un bras de connexion en une seule pièce (50) pour connexion à l'essieu de véhicule (30).

15. Procédé pour assembler un module d'angle de camion selon l'une quelconque des revendications précédentes et un essieu de camion, comportant les étapes consistant à :
- fournir un module d'angle de camion ayant au moins un support de pivot lâche (34),
- connecter l'essieu de camion (30) au pivot (28)
- assembler ledit module d'angle de camion en connectant au moins un support de pivot lâche (34)
- assembler l'unité auxiliaire (7).
